(19) Europäisches Patentamt
European Patent Office
Office européen des brevets

(11) **EP 4 654 411 B1**

(12) **EUROPÄISCHE PATENTSCHRIFT**

(45) Veröffentlichungstag und Bekanntmachung des Hinweises auf die Patenterteilung:
**01.07.2026 Patentblatt 2026/27**

(21) Anmeldenummer: **24177678.0**

(22) Anmeldetag: **23.05.2024**

(51) Internationale Patentklassifikation (IPC):
**H02J 1/08** (2026.01)    **H02J 3/36** (2026.01)

(52) Gemeinsame Patentklassifikation (CPC):
**H02J 1/08; H02J 3/36**

(54) **LASTFLUSSREGLER FÜR GLEICHSPANNUNGSNETZE**

LOAD FLOW CONTROLLER FOR DC NETWORKS

RÉGULATEUR DE FLUX DE CHARGE POUR RÉSEAUX À COURANT CONTINUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**26.11.2025 Patentblatt 2025/48**

(73) Patentinhaber: **Innomotics GmbH**
**90441 Nürnberg (DE)**

(72) Erfinder: **Hofmann, Viktor**
**95448 Bayreuth (DE)**

(74) Vertreter: **Michalski Hüttermann & Partner mbB**
**Kaistraße 16A**
**40221 Düsseldorf (DE)**

(56) Entgegenhaltungen:
**EP-B1- 3 218 980**

- **HOFMANN VIKTOR ET AL: "A modular and scalable HVDC current flow controller", 2015 17TH EUROPEAN CONFERENCE ON POWER ELECTRONICS AND APPLICATIONS (EPE'15 ECCE-EUROPE), JOINTLY OWNED BY EPE ASSOCIATION AND IEEE PELS, 8 September 2015 (2015-09-08), pages 1 - 9, XP032800085, [retrieved on 20151027], DOI: 10.1109/EPE.2015.7309081**

**Beschreibung**

Die Erfindung betrifft einen Lastflussregler für ein Gleichspannungsnetz mit einem Netzanschluss, einem ersten Übertragungsanschluss und einem zweiten Übertragungsanschluss, sowie einer ersten Spannungsquelle. Ferner betrifft die Erfindung ein Gleichspannungsnetz mit einem derartigen Lastflussregler, einem ersten Gleichspannungsteilnetz und zwei Leitungen.

Die Erfindung betrifft weiter ein Verfahren zum Betreiben eines derartigen Lastflussreglers oder eines derartigen Gleichspannungsnetzes.

In vermaschten Gleichspannungsnetzen oder im Allgemeinen bei parallelen Übertragungspfaden mit Gleichspannung, die auch als Teil eines Gleichspannungsnetzes aufgefasst werden können, ist die Leistungsaufteilung auf die einzelnen Pfade von den angeschlossenen Konvertern nicht direkt beeinflussbar. Als vermascht wird ein Gleichspannungsnetz unter anderem dann bezeichnet, wenn für die Energieübertragung unterschiedliche Pfade zur Verfügung stehen, insbesondere auch über unterschiedliche Netzwerkknoten, über den ein Energiefluss zwischen einer Energiequelle und einer Energiesenke oder allgemein zwischen zwei Gleichspannungsteilnetzen erfolgen kann. Eine unkontrollierte Aufteilung des Lastflusses kann zu erhöhten Übertragungsverlusten oder im Extremfall zu einer Überlastung eines Gleichspannungsnetzes oder eines Gleichspannungsteilnetzes, insbesondere zu einer Überlastung von Systemkomponenten und damit zu einem Systemausfall führen. Dies gilt sowohl für den regulären Betrieb, in dem die einzelnen Übertragungswiderstände auch zeitlich variieren können, als auch für Fehlerfälle, bei denen beispielsweise einzelne Parallelpfade komplett ausfallen.

In Wechselspannungsnetzen ist eine Lastflussregelung seit Jahrzehnten etabliert und wird über die Anpassung der Blindleistung realisiert. In Gleichspannungsnetzen kann der Lastfluss beispielsweise durch eine Gleichspannung und durch Übertragungswiderstände beeinflusst werden. Dies führt jedoch zu Verlusten und zu einem Bedarf bezüglich elektrischer Energie für das Einbringen der Gleichspannung. Die Dokumente EP3218980B1 und XP032800085 (HOFMANN VIKTOR ET AL: "A modular and scalable HVDC current flow controller") offenbaren Lastflussregler für Gleichspannungsnetze gemäß dem Stand der Technik.

Gleichspannungsnetze werden auch als DC-Netze bezeichnet. Wechselspannungsnetze werden auch als AC-Netze bezeichnet.

Ein Gleichspannungsteilnetz ist ein Teil eines Gleichspannungsnetzes. Ein Gleichspannungsnetz kann eine Vielzahl von Gleichspannungsteilnetzen umfassen. Ein Gleichspannungsteilnetz weist mindestens eine Energiequelle oder einen elektrischen Verbraucher auf. Darüber hinaus kann es auch eine Vielzahl von Energiequellen und/oder eine Vielzahl von elektrischen Verbrauchern aufweisen.

Der Erfindung liegt die Aufgabe zugrunde, einen Lastflussregler zur Beeinflussung des Leistungsflusses innerhalb eines Gleichspannungsnetzes zu verbessern.

Diese Aufgabe wird durch einen Lastflussregler mit den Merkmalen des Anspruchs 1 gelöst. Ferner wird diese Aufgabe durch ein Gleichspannungsnetz mit den Merkmalen des Anspruchs 7 gelöst. Diese Aufgabe wird weiter durch ein Verfahren zum Betreiben eines derartigen Lastflussreglers oder eines derartigen Gleichspannungsnetzes mit den Merkmalen des Anspruchs 9 gelöst.

Weitere vorteilhafte Ausgestaltungen der Erfindung sind in den abhängigen Ansprüchen angegeben.

Der Erfindung liegt unter anderem die Erkenntnis zugrunde, dass sich der Lastflussregler auf besonders einfache Weise dadurch realisieren lässt, wenn die zur Regulierung des Lastflusses vorhandenen Spannungsquellen jeweils einen Gleichspannungsanteil und einen Wechselspannungsanteil erzeugen. Es hat sich gezeigt, dass die durch die Spannungsquellen ausgetauschten Energien, eine erste Energie hervorgerufen durch den Gleichspannungsanteil und einen Gleichstrom und eine zweite Energie, hervorgerufen durch den Wechselspannungsanteil und einen Wechselstrom unabhängig voneinander steuerbar sind. Darüber hinaus ist es möglich, dass die erste Energie und die zweite Energie sich für alle oder zumindest einen Teil der Spannungsquellen kompensieren.

Für die Erzeugung des Wechselspannungsanteil kann jeder beliebige gleichanteilsfreie Zeitverlauf herangezogen werden. Insbesondere die Zeitverläufe von einem Sinus, einem Rechtecksignal, einem trapezförmigen Verlauf oder einem Dreieckverlauf können für die Erzeugung des Wechselspannungsanteils genutzt werden.

Der Gleichspannungsabfall zwischen dem Netzanschluss und dem ersten bzw. zweiten Übertragungsanschluss wird dazu genutzt, die Aufteilung des Energieflusses zwischen Netzanschluss und erstem bzw. zweiten Übertragungsanschluss zu beeinflussen. Dabei wird die Gleichspannung zwischen dem Netzanschluss und dem ersten Übertragungsanschluss durch den Gleichspannungsanteil der ersten Spannungsquelle und der dritten Spannungsquelle erzeugt. Die Aufteilung der Gleichspannung auf die beiden Gleichspannungsanteile kann beliebig erfolgen. Weiter wird die Gleichspannung zwischen dem Netzanschluss und dem zweiten Übertragungsanschluss durch den Gleichspannungsanteil der zweiten Spannungsquelle und der vierten Spannungsquelle erzeugt. Die Aufteilung der Gleichspannung auf die beiden Gleichspannungsanteile kann ebenfalls beliebig erfolgen.

Dabei müssen die Spannungsquellen den sich aufgrund des erzeugten Gleichspannungsanteils und dem vorhandenen Gleichstrom ergebenen Energieaustausch aufnehmen bzw. abgeben können. Dafür benötigen die Gleichspannungsquellen einen entsprechenden Energiespeicher oder müssen alternativ den Energiebedarf über weitere Anschlüsse mit dem Gleichspannungsnetz austauschen. Die Aufteilung der Gleichspannung in die beiden Gleichspannungsanteile kann beispielsweise derart vorgenommen werden, dass sich der Energiebedarf der beiden beteiligten Spannungsquellen gleich auf diese aufteilt. Im Allgemeinen ist das dann der Fall, wenn die Gleichspannungsanteile dieser beiden Gleichspannungsanteile gleich sind. Dadurch können auch die beiden in Reihe angeordneten Spannungsquellen, d.h. die erste und die dritte Spannungsquelle sowie die zweite und die vierte Spannungsquelle gleich ausgebildet sein.

Die Aufteilung des Energieflusses zwischen dem ersten und dem zweiten Übertragungsanschluss kann die gleiche Energieflussrichtung vorsehen oder auch unterschiedliche Energieflussrichtungen umfassen. Unter einer unterschiedlichen Energieflussrichtung ist beispielsweise zu verstehen, dass ein Energiebedarf von 140% über den ersten Übertragungsanschluss in Richtung der angeschlossenen Leitung geliefert wird und über den zweiten Übertragungsanschluss 40% des Energiebedarfs in Richtung Netzanschluss übertragen werden. Eine übliche Aufteilung sieht jedoch meist die gleiche Energieflussrichtung vom Netzanschluss zu dem ersten bzw. zweiten Übertragungsanschluss vor, bei dem die 100% des Energiebedarfs in jeweilige Anteile im Bereich von 0% bis 100% aufgeteilt werden, bei denen sich in Summe die 100% ergeben.

Es hat sich gezeigt, dass sich der durch die Spannungsquellen bereitzustellende oder aufzunehmende Energiebedarf dadurch reduzieren lässt, dass neben dem Gleichspannungsanteil ein Wechselspannungsanteil durch die jeweiligen Spannungsquellen erzeugt wird. Um jedoch das Gleichspannungsnetz nicht mit einer Wechselspannung oder einem Wechselstrom zu belasten, wirken diese Wechselspannungsanteile und Wechselströme nur im Innern des Lastflussreglers. Die Wechselspannungen treten somit an den Anschlüssen des Lastflussreglers nicht in Erscheinung. Dazu kompensieren sich die Wechselspannungsanteile der ersten Spannungsquelle und der dritten Spannungsquelle in einer Spannung zwischen dem Netzanschluss und dem ersten Übertragungsanschluss. Gleichzeitig kompensieren sich die Wechselspannungsanteile der zweiten Spannungsquelle und der vierten Spannungsquelle in einer Spannung zwischen dem Netzanschluss und dem zweiten Übertragungsanschluss.

Mit anderen Worten heben sich die Wechselspannungsanteile der ersten und der dritten Spannungsquelle in einer Spannung zwischen dem Netzanschluss und dem ersten Übertragungsanschluss auf. Dies wird beispielsweise dadurch erreicht, dass der Wechselspannungsanteil der ersten Spannungsquelle bei entsprechender Wahl der Bezugspfeilrichtungen das entgegengesetzte Vorzeichen hat wie der Wechselspannungsanteil der dritten Spannungsquelle. Gleichzeitig heben sich die Wechselspannungsanteile der zweiten und der vierten Spannungsquelle in einer Spannung zwischen dem Netzanschluss und dem zweiten Übertragungsanschluss auf. Dies wird beispielsweise dadurch erreicht, dass der Wechselspannungsanteil der zweiten Spannungsquelle bei entsprechender Wahl der Bezugspfeilrichtungen das entgegengesetzte Vorzeichen hat wie der Wechselspannungsanteil der vierten Spannungsquelle.

Von einem Aufheben oder einem Kompensieren kann ausgegangen werden, wenn durch die Kompensation eine Restspannung von maximal 5% der Amplitude des Wechselspannungsanteils in der Spannung zwischen Netzanschluss und jeweiligen Übertragungsanschluss verbleibt. Bei einem sinusförmigen Verlauf, Rechteckverlauf, trapezförmigen Verlauf oder Dreieckverlauf kann die Kompensation dadurch vorgenommen werden, dass die Amplituden gleich oder nahezu sind und einen Phasenunterschied von 180° ($=\pi$) oder etwa 180° bei einer Bezugspfeilrichtung vom Netzanschluss zum Übertragungsanschluss aufweisen. Mit anderen Worten unterscheiden sich bei einem sinusförmigen Verlauf, Rechteckverlauf, trapezförmigen Verlauf oder Dreieckverlauf die Wechselspannungsanteile von erster und dritter Spannungsquelle sowie die Wechselspannungsanteile von zweiter und vierter Spannungsquelle bei entsprechender Wahl der Bezugspfeile um das Vorzeichen.

Dabei bilden die ersten Spannungsquelle, die zweite Spannungsquelle und der erste Strompfad eine erste Masche, in der sich ein erster Wechselstrom abhängig von dem Wechselspannungsanteil der ersten Spannungsquelle und dem Wechselspannungsanteil der zweiten Spannungsquelle ausbildet. Die Ausbildung eines Gleichstroms in dieser Masche wird durch den ersten Strompfad verhindert. Zur besseren Steuerbarkeit und Regelbarkeit des ersten Wechselstroms hat es sich als vorteilhaft erwiesen, eine erste Induktivität in der ersten Masche anzuordnen. Insbesondere kann die erste Induktivität im ersten Strompfad angeordnet sein, damit er sich nicht auf einen Gleichstrom auswirkt. Zur Unterdrückung des Gleichstroms durch den ersten Strompfad kann der erste Strompfad beispielsweise einen Kondensator aufweisen, der beispielsweise in einer Reihenschaltung mit der ersten Induktivität angeordnet ist.

Weiter bilden die dritte Spannungsquelle, die vierte Spannungsquelle, der erste Strompfad und der zweite Strompfad eine zweite Masche, in der sich ein zweiter Wechselstrom abhängig von dem Wechselspannungsanteil der dritten Spannungsquelle und dem Wechselspannungsanteil der vierten Spannungsquelle ausbildet. Die Ausbildung eines Gleichstroms in dieser Masche und auch über die erste Masche hinweg wird durch den ersten Strompfad und dem zweiten Strompfad verhindert. Zur besseren Steuerbarkeit und Regelbarkeit des zweiten Wechselstroms hat es sich als vorteilhaft erwiesen, eine zweite Induktivität in der zweiten Masche anzuordnen. Insbesondere kann die zweite Induktivität im zweiten Strompfad angeordnet sein. Zur Unterdrückung des Gleichstroms durch den zweiten Strompfad kann auch der zweite Strompfad beispielsweise einen Kondensator aufweisen, der beispielsweise in einer Reihenschaltung mit der zweiten Induktivität angeordnet ist. Durch die Anordnung einer ersten Induktivität im ersten Strompfad wirkt diese auch in der zweiten Masche, so dass auf die Anordnung der zweiten Induktivität verzichtet werden kann.

Die unabhängige Steuerung von Wechselspannungsanteil und Gleichspannungsanteil kann derart erfolgen, dass zumindest bei einem Teil der Spannungsquellen der sich aufgrund des Wechselspannungsanteils ergebene Energieaustausch, dem durch die Gleichspannungsanteile hervorgerufenen Energieaustausch entgegenwirkt. Insbesondere kann zumindest bei einem Teil der Spannungsquellen der Gleichspannungsanteil und Wechselspannungsanteil derart gewählt werden, dass diese erste Energie, hervorgerufen durch den Gleichspannungsanteil und einen Gleichstrom, und die zweite Energie, hervorgerufen durch den Wechselspannungsanteil und einen Wechselstrom, sich kompensieren. Dann kann bei der betreffenden Spannungsquelle der Energiespeicher besonders klein gewählt werden. Ebenso benötigt diese Spannungsquelle keine weiteren Anschlüsse zum Energieaustausch mit dem Gleichspannungsnetz. Die entsprechende Spannungsquelle kann dann genau zwei Anschlüsse aufweisen.

Besonders vorteilhaft ist der Lastflussregler, wenn der Lastflussregler eine Steuervorrichtung umfasst, die eingerichtet ist, das Verfahren oder zumindest Teile des Verfahrens zum Betreiben eines derartigen Lastflussreglers auszuführen.

Der Lastflussregler kann Teil eines Gleichspannungsnetzes sein. Dieser verbindet ein erstes Gleichspannungsteilnetz mit einer Komponente des Gleichspannungsnetzes. Diese Verbindung wird über zwei Leitungen geschaffen, die jeweils mit einem der Übertragungsanschlüsse verbunden sind. Anstelle einer einzelnen Komponente kann der über die Leitungen verbundene Teil des Gleichspannungsnetzes auch ein zweites Gleichspannungsteilnetz sein. Die Leitungen können weit verzweigte Wege eines Gleichspannungsnetzes betreffen. Durch den Lastflussregler ist es möglich, die Aufteilung der Leistung auf die beiden Leitungen zu beeinflussen, zu steuern oder zu regeln.

Insbesondere bei einem weit verzweigten Gleichspannungsnetz, bei dem sich unterschiedliche Längen der ersten und der zweiten Leitung ergeben, kann die Verwendung des vorgeschlagenen Lastflussreglers besonders vorteilhaft sein. Durch die vorhandenen Impedanzverhältnisse kann es gerade bei stark unterschiedlichen Leitungslängen von mehr als 10% zu einer stark unterschiedlichen Aufteilung des Leistungsflusses kommen, der mit einer Überlastung einzelner Teile des Gleichspannungsnetzes einhergeht. Besonders stark ist dieser Effekt bei Leitungslängen, bei der sich erste und zweite Leitung um mehr als 40% unterscheiden. Um diese Überlastungen zu vermeiden und eine gute Ausnutzung der vorhandenen Komponenten und Leitungen des Gleichspannungsnetzes sicherzustellen hat sich die Verwendung des Lastflussreglers als besonders hilfreich und vorteilhaft erwiesen.

Die Wechselspannungsanteile der ersten, zweiten, dritten und vierten Spannungsquellen haben die gleiche Frequenz. Damit ist es möglich, dass sich die Wechselspannungsanteile der ersten und dritten Spannungsquelle sowie der zweiten und vierten Spannungsquelle in einer Spannung zwischen dem Netzanschluss und dem betreffenden Übertragungsanschluss kompensieren. Die gleiche Frequenz der ersten und zweiten Spannungsquelle sowie der dritten und vierten Spannungsquelle ermöglichen den Energieaustausch zwischen diesen Spannungsquellen. Somit ergibt sich, dass die erste, zweite, dritte und vierte Spannungsquelle mit einem Wechselspannungsanteil mit einer ersten Frequenz betrieben werden.

Bei einer vorteilhaften Ausgestaltung der Erfindung erzeugt die zweite Gleichspannungsquelle den Gleichspannungsanteil mit einem zum Gleichspannungsanteil der ersten Gleichspannungsquelle entgegengesetztem Vorzeichen, wobei die vierte Gleichspannungsquelle den Gleichspannungsanteil mit einem zum Gleichspannungsanteil der dritten Gleichspannungsquelle entgegengesetztem Vorzeichen erzeugt. Dabei haben Spannung, die vom Netzanschluss in Richtung Übertragungsanschluss gerichtet sind, das gleiche Vorzeichen. Es hat sich gezeigt, dass für die Aufteilung der im Gleichspannungsnetz mittels Gleichstroms übertragenen Leistung nur die Potentialdifferenz zwischen erstem Übertragungsanschluss und zweitem Übertragungsanschluss von Bedeutung ist. Dieser Freiheitsgrad der Potentialhöhe kann dazu genutzt werden, dass die aufgrund der Gleichanteile erzeugten Energien in den Spannungsquellen einer Masche unterschiedliches Vorzeichen haben. Mit anderen Worten wird die Höhe der Gleichanteile derart erzeugt, dass die erste Spannungsquelle aufgrund des Gleichspannungsanteils elektrische Energie aufnimmt und die zweite Spannungsquelle aufgrund des Gleichspannungsanteils in gleicher Energie abgibt oder umgekehrt. Mit Hilfe des Wechselspannungsanteils kann dann diese Energie wieder zwischen diesen Spannungsquellen ausgeglichen werden. Das heißt, die durch eine der Spannungsquellen durch den Gleichanteil aufgenommene Energie wird im zeitlichen Mittel wieder durch den Wechselspannungsanteil an die andere Spannungsquelle abgegeben. Gleiches gilt sowohl für die erste Masche als auch für die zweite Masche. Die auf diese Weise betriebenen Spannungsquellen benötigen, wenn überhaupt, nur einen kleinen Energiespeicher, der kurzfristige Schwankungen ausgleicht. Auch benötigen diese derart betriebenen Spannungsquellen keinen weiteren Energieaustausch mit dem Energieversorgungsnetz. Sämtlicher Energieaustausch erfolgt über die beiden Anschlüsse der Spannungsquelle. Die Spannungsquellen können folglich mit nur zwei Anschlüssen ausgeführt sein.

Bei einer weiteren vorteilhaften Ausgestaltung der Erfindung sind der Gleichspannungsanteil und der Wechselspannungsanteil jeder der Spannungsquellen derart bemessen, dass die aufgrund von Gleichanteilen und Wechselanteilen ausgetauschte Energie der jeweiligen Spannungsquelle im zeitlichen Mittel gleich null ist. Der Freiheitsgrad der Aufteilung der zwei Gleichspannungsanteile auf die Spannungsquellen zwischen dem Netzanschluss und dem jeweiligen Übertragungsanschluss kann derart geschehen, dass die Kompensation durch die Wechselspannungsanteile erfolgen kann. Da der Energieaustausch durch die Wechselspannungsanteile durch die Bedingung der Kompensation zweier in Reihe angeordneter Spannungsquellen nicht in der ersten und der zweiten Maschen unabhängig voneinander vorgegeben werden kann, erfolgt die Anpassung über den Freiheitsgrad der Aufteilung der gesamten Gleichspannung zwischen Netzanschluss und jeweiligen Übertragungsanschluss auf die Gleichspannungsanteile der entsprechenden Spannungsquellen. Damit ist es möglich, alle vier Spannungsquellen derart zu betreiben, dass sich eine gewünschte Aufteilung des Stroms und der damit einhergehenden Leistung auf die zwei Übertragungsanschlüsse ergibt und gleichzeitig alle Spannungsquellen energieneutral betrieben werden. Das heißt, die Spannungsquellen nehmen bei einem derartigen Betrieb im zeitlichen Mittel weder Energie auf noch geben sie Energie ab.

Dabei ist beispielsweise der Energieaustauch aufgrund des Gleichspannungsanteils der ersten und zweiten Spannungsquelle bis auf das Vorzeichen gleich und wird durch den Wechselspannungsanteil in der ersten Masche kompensiert. Da die Kompensation durch den Wechselspannungsanteil in der zweiten Masche aufgrund der Kompensation der Spannungen zwischen Netzanschluss und jeweiligen Übertragungsanschluss festgelegt ist, erfolgt die Anpassung der Leistung aufgrund von Gleichspannungsanteil und Wechselspannungsanteil in der zweiten Masche durch Variation der Aufteilung der Gleichspannung auf die unterschiedlichen in Reihe angeordneten Spannungsquellen. Damit ist es möglich, die erste, zweite, dritte und vierte Spannungsquelle zu betreiben, ohne in Summe Energie aufnehmen zu müssen. Die Spannungsquellen benötigen keinen Anschluss zum Austausch von elektrischer Energie mit dem Gleichspannungsnetz. Daher benötigen die Spannungsquellen nur genau zwei Anschlüsse. Auch ein vorhandener Energiespeicher der Spannungsquellen kann besonders klein ausgeführt werden, da nur geringe Mengen an Energie auszutauschen sind.

Bei einer weiteren vorteilhaften Ausgestaltung der Erfindung wird mindestens eine der Spannungsquellen durch ein Submodul oder eine Reihenschaltung von Submodulen gebildet, wobei das Submodul mindestens zwei Halbleiterschalter und mindestens einen Kondensator aufweist, die derart angeordnet sind, dass mittels der Halbleiter zumindest die Schaltzustände Kurzschluss und Kondensatorspannung an Anschlüssen des Submoduls erzeugbar sind. Ein derartiges Submodul ist aus einem modularen Multilevel Stromrichter (M2C oder MMC) bereits bekannt. Ein derartiges Submodul hat genau zwei Anschlüsse, welche die Spannung der Spannungsquelle bestimmen und über die gleichzeitig der Energieaustausch mit dem Energiespeicher, dem Kondensator, erfolgt. Ein derartiges Submodul wird auch als zweipolig bezeichnet. Damit können alle Spannungsquellen, die energieneutral beispielsweise mit dem vorgeschlagenen Verfahren betrieben werden, durch Submodule oder einer Reihenschaltung von Submodulen betrieben werden. Eine zusätzliche Energieregelung ist nicht erforderlich, so dass diese Submodule genau zwei Anschlüsse aufweisen. Werden die beschriebenen Freiheitsgerade genutzt, um alle Spannungsquellen energieneutral zu betreiben, so können alle Spannungsquellen durch ein Submodul oder einer Reihenschaltung von Submodulen ausgebildet sein.

Bei einer weiteren vorteilhaften Ausgestaltung der Erfindung weist das Submodul mindestens vier Halbleiterschalter auf, die derart angeordnet sind, dass mittels der Halbleiter zumindest die Schaltzustände Kurzschluss, positive Kondensatorspannung und negative Kondensatorspannung an den Anschlüssen des Submoduls erzeugbar sind. Eine mögliche Ausgestaltung für ein derartiges Submodul ist das sogenannte Vollbrückenmodul. Dieses erlaubt die Bereitstellung einer Spannung mit unterschiedlichem Vorzeichen. Damit ist es möglich, unter allen Betriebsbedingungen, den energieneutralen Betrieb alle Spannungsquellen des Lastflussreglers sicherzustellen. Somit können alle Spannungsquellen durch ein zweipoliges Submodul oder einer Reihenschaltung von zweipoligen Submodulen ausgebildet sein. In diesem Fall kann in einer vorteilhaften Ausgestaltung der Erfindung das Submodul bzw. können die Submodule jeweils nur genau zwei Anschlüsse aufweisen.

Bei einer weiteren vorteilhaften Ausgestaltung der Erfindung weist das Submodul bzw. weisen die Submodule genau zwei Anschlüsse zum Austausch elektrischer Energie auf. Bei dem energieneutralen Betrieb ist es möglich, den Energieaustausch allein über die beiden Anschlüsse des Submoduls vorzunehmen. Weitere Anschlüsse zum Auf- oder Entladen des Energiespeichers unabhängig von der Spannung der Spannungsquelle sind nicht erforderlich. Dabei kann das Submodul weitere Anschlüsse wie beispielsweise für die Steuerung oder Regelung, der Kühlung etc. aufweisen, die jedoch nicht oder nicht maßgeblich zur Energieübertragung mit dem Energiespeicher beitragen.

Bei einer weiteren vorteilhaften Ausgestaltung der Erfindung wird/werden der erste Strompfad und/oder der zweite Strompfad durch eine Gleichspannungsquelle gebildet. Eine besonders einfache Ausgestaltung des ersten Pfades und/oder des zweiten Pfades kann durch eine Gleichspannungsquelle erfolgen. Dabei wird die Gleichspannungsquelle in ihrem Spannungswert derart gesteuert oder geregelt, die Ausbildung eines Gleichstroms zu verhindern. Damit kann die Gleichspannungsquelle baugleich zu den Spannungsquellen oder zumindest einer der Spanungsquellen ausgeführt sein. Beispielsweise kann in einer vorteilhaften Ausgestaltung der Erfindung mindestens eine der Gleichspannungsquellen durch ein weiteres Submodul oder eine Reihenschaltung von weiteren Submodulen gebildet werden, wobei das weitere Submodul mindestens zwei Halbleiterschalter und mindestens einen Kondensator aufweist, die derart angeordnet sind, dass mittels der Halbleiter zumindest die Schaltzustände Kurzschluss und Kondensatorspannung an Anschlüssen des weiteren Submoduls erzeugbar sind. Dies erhöht die Gleichteile, erhöht damit nicht nur die Zuverlässigkeit, sondern ermöglicht es auch, den Lastflussregler kostengünstig herzustellen.

Im Folgenden wird die Erfindung anhand der in den Figuren dargestellten Ausführungsbeispiele näher beschreiben und erläutert. Es zeigen:

FIG 1        ein Gleichspannungsnetz mit einem Lastflussregler,

FIG 2        ein Ausführungsbeispiel eines Lastflussreglers,

FIG 3, FIG 4        Übersichtsbilder zur Verdeutlichung des Betriebsverfahrens und

FIG 5 bis FIG 7        Ausführungsbeispiele von Submodulen.

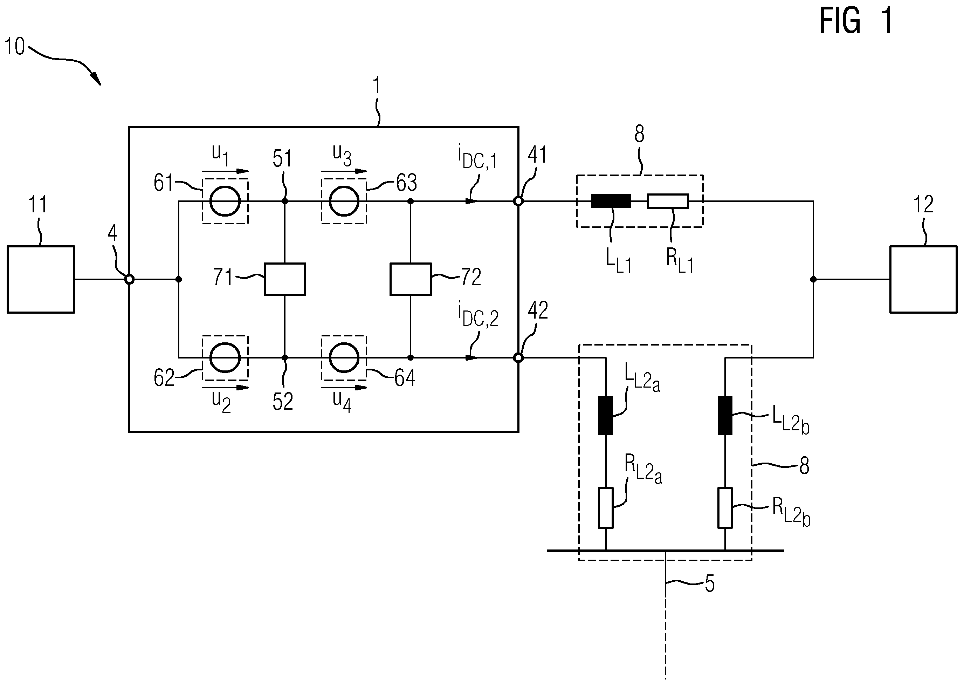

Die FIG 1 zeigt ein Gleichspannungsnetz 10 mit einem ersten Gleichspannungsteilnetz 11 und einem zweiten Gleichspannungsteilnetz 12. Diese Gleichspannungsteilnetze 11,12 weisen mindestens eine Energiequelle oder einen elektrischen Verbraucher auf. Darüber hinaus können diese Gleichspannungsteilnetze 11,12 auch eine Vielzahl von Energiequellen und/oder elektrischen Verbrauchern aufweisen. Der Energieaustausch innerhalb des Gleichspannungsnetzes 10 erfolgt mit einer Gleichspannung. Das erste Gleichspannungsteilnetz 11 ist über Leitungen 8 mit dem zweiten Gleichspannungsteilnetz 12 verbunden. Das Verhalten der Leitungen 8 kann dabei mit Hilfe eines Widerstands $R_{Lx}$ und einer Induktivität $L_{Lx}$ modelliert werden. Die Leitungen müssen nicht notwendigerweise parallel verlaufen, sondern können unterschiedliche Wege in einem vermaschten Gleichspannungsnetz 10 darstellen. Dabei kann eine der Leitungen 8 auch über einen zur anderen Leitung weit entfernten Netzwerkknoten 5 gebildet werden. Dies führt dazu, dass sich die Leitungslängen deutlich, das heißt um mehr als 10% und bei einem Verlauf über einen derart entfernten Netzwerkknoten 5 auch teilweise um mehr als 40%, unterscheiden. Dies würde ohne geeignete Maßnahmen zu einer unterschiedlichen Auslastung und damit zu einer ungleichen Belastung der beiden Leitungen 8 führen. Um die Belastung durch die Aufteilung der Ströme und den damit einhergehenden Leistungen beeinflussen zu können, ist zwischen den Gleichspannungsteilnetzen 11,12 ein Lastflussregler 1 in Reihe zu den Leitungen 8 angeordnet.

Der Lastflussregler 1 weist als Anschlüsse einen Netzanschluss 4, einen ersten Übertragungsanschluss 41 und einen zweiten Übertragungsanschluss 42 auf. Der Netzanschluss 4 dient der Verbindung mit dem ersten Gleichspannungsteilnetz 11. Zwischen dem Netzanschluss 4 und dem ersten Übertragungsanschluss 41 ist eine erste Spannungsquelle 61 und eine dritte Spannungsquelle 63 in Reihe angeordnet, die nicht notwendigerweise vom gleichen Strom, aber vom gleichen Gleichstrom $i_{DC,1}$ durchflossen werden. Zwischen der ersten Spannungsquelle 61 und der dritten Spannungsquelle 63 befindet sich ein erster interner Knoten 51. Zwischen dem Netzanschluss 4 und dem zweiten Übertragungsanschluss 42 ist eine zweite Spannungsquelle 62 und eine vierte Spannungsquelle 64 in Reihe angeordnet, die nicht notwendigerweise vom gleichen Strom, aber vom gleichen Gleichstrom $i_{DC,2}$ durchflossen werden. Zwischen der zweiten Spannungsquelle 62 und der vierten Spannungsquelle 64 befindet sich ein zweiter interner Knoten 52. Zwischen den beiden internen Knoten 51,52 ist ein erster Strompfad 71 angeordnet, der derart ausgebildet ist, die Entstehung eines Gleichstroms durch den ersten Strompfad 71 zu verhindern. Ebenso ist zwischen dem ersten Übertragungsanschluss 41 und dem zweiten Übertragungsanschluss 42 ein zweiter Strompfad 72 angeordnet, der derart ausgebildet ist, die Entstehung eines Gleichstroms durch den zweiten Strompfad 72 zu verhindern. Der erste und der zweite Strompfad 71,72 dienen dazu, wie in den folgenden Figuren näher erläutert, für einen Wechselstrom eine erste und eine zweite Masche 81,82 zu bilden, mit der elektrische Energie zwischen den Elementen der jeweiligen Masche 81,82 ausgetauscht werden kann. Damit kann ein Energiebedarf oder Energieüberschuss aufgrund der Gleichspannungsanteile der einzelnen Spannungsquellen 61,62,63,64 ausgeglichen und kompensiert werden. Gleichzeitig treten diese Wechselspannungsanteile außerhalb des Lastflussreglers nicht in Erscheinung, so dass von ihnen keine Störung des Gleichspannungsnetzes 10 ausgeht.

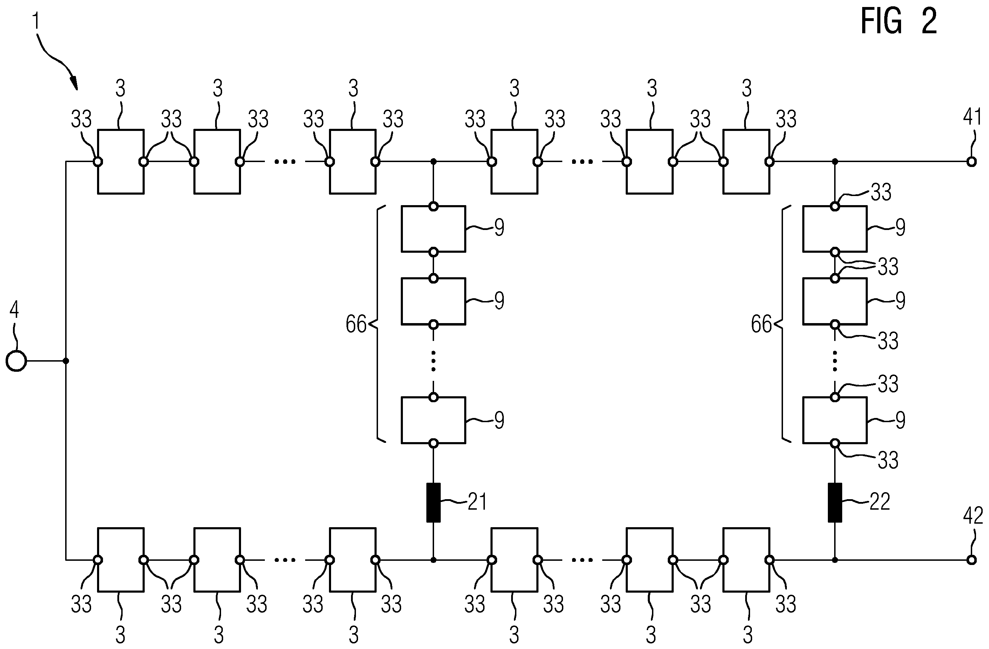

Durch eine geeignete Wahl von Gleichspannungsanteil und Wechselspanungsanteil der jeweiligen Spannungsquellen 61,62,63,64, können die gleichspannungsanteiligen Energiebedarfe und Energieüberschüsse mittels der Wechselspannungskomponenten im zeitlichen Mittel ausgeglichen werden. Dies ermöglicht den Einsatz von Spannungsquellen, die nur einen Energiespeicher mit geringer (Speicher-)Kapazität aufweisen. Ebenso brauchen diese Spannungsquellen auch keine weiteren Anschlüsse, über die ein Energieaustausch mit dem Gleichspannungsnetz 10 erfolgen kann. Diese Eigenschaften ermöglichen den Einsatz von Submodulen 3, die bereits aus einem modularen Multilevel-Stromrichter bekannt sind. Ein entsprechendes Ausführungsbeispiel für einen derartigen Aufbau zeigt die FIG 2. Die Submodule 3 dieses Aufbaus weisen genau zwei Anschlüsse 33 auf. Je nach benötigter Spannung wird für eine Spannungsquelle ein Submodul 3 oder eine Reihenschaltung von Submodulen 3 verwendet. Auch für die Realisierung des ersten und des zweiten Strompfades 71,72 können weitere Submodule 9 verwendet werden. Da diese Strompfade 71,72, realisiert durch eine Gleichspannungsquelle 66, nur eine unipolare Spannung, d. h. nur eine Spannung mit einem Vorzeichen, bereitstellen muss, können als weitere Submodule 9 unipolare Submodule wie beispielsweise ein Halbbrückenmodul oder ein Doppelhalbbrückenmodul verwendet werden.

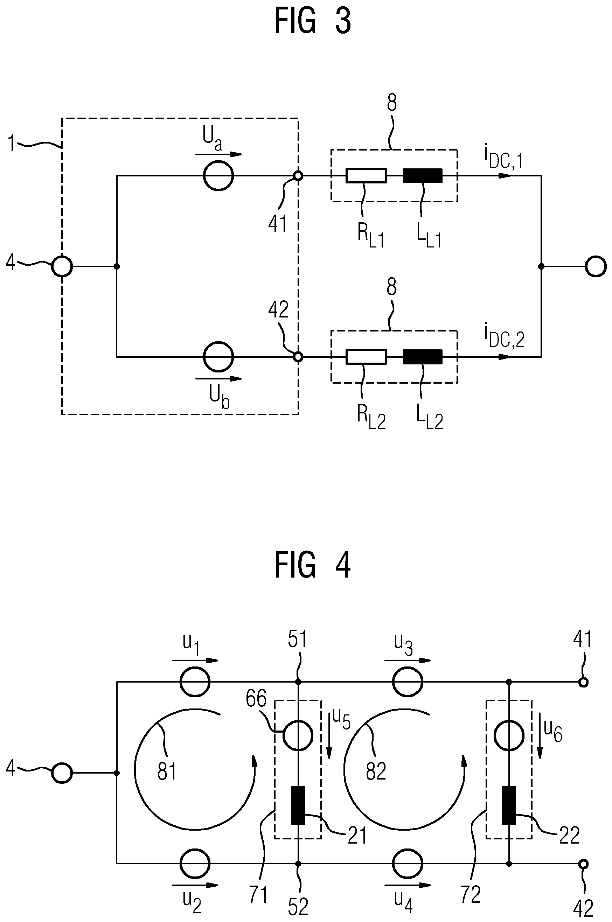

Anhand der FIG 3 kann die Wirkung der Gleichspannungsanteile anschaulich verdeutlicht werden. Die Gleichspannungsanteile der ersten Spannungsquelle 61 und der dritten Spannungsquelle 63 addieren sich zu der Spannung $U_a$, die Gleichspannungsanteile der zweiten Spannungsquelle 62 und der vierten Spannungsquelle 64 addieren sich zu der Spannung $U_b$. Die Induktivitäten $L_{Lx}$ haben keinen Einfluss auf den Gleichstrom. Somit ergibt sich der Zusammenhang

$$U_a + R_{L1} \cdot i_{DC,1} = U_b + R_{L2} \cdot i_{DC,2}.$$

Damit ein energieneutraler Betrieb der Spannungsquellen durch die Verwendung einer Wechselspannung realisiert werden kann, sind die Energien der Summe der ersten und dritten Spannungsquelle 61,63 betraglich gleich mit der Summe der Energien der zweiten und vierten Spannungsquelle 62,64 und unterscheiden sich um das Vorzeichen. Dies führt zu

$$U_a \cdot i_{DC,1} = -U_b \cdot i_{DC,2}.$$

Führt man nun zwei Hilfsvariablen

$$K_I = \frac{i_{DC,1}}{i_{DC,1} + i_{DC,2}}$$

Stromteilungsfaktor und

$$K_L = \frac{R_{L2}}{R_{L1}}$$

Widerstandsverhältnis zur Beschreibung des Systemzustands ein, so ergeben sich folgende Spannungen, die es erlauben, den Lastflussregler energieneutral zu betreiben

$$U_a = R_{L1} \cdot \left(i_{DC,1} + i_{DC,2}\right)(1 - K_I)[K_L(1 - K_I) - K_I]$$

und

$$U_b = -R_{L1} \cdot \left(i_{DC,1} + i_{DC,2}\right)K_I[K_L(1 - K_I) - K_I].$$

Damit kann jede gewünschte Stromaufteilung $K_I$ gesteuert oder geregelt werden. Es ist ebenfalls möglich, eine Leitung stromfrei zu schalten ($K_I$=1 bzw. $K_I$=0) oder den Stromfluss umzukehren. Die genannten Werte für die Gleichspannungsanteile erfüllen auch die Bedingung, dass die erste und dritte Spannungsquelle in Summe die gleiche Energie austauschen wie die Summe der zweiten und vierten Spannungsquelle, wobei sich diese Summen um das Vorzeichen unterscheiden.

Die Regelung der Stromaufteilung bzw. der Leistungsaufteilung kann mit Hilfe eines Regelkreises vorgenommen werden, wobei die o.g. Werte sich für eine Vorsteuerung eignen. Der Regelkreis kann darüber beispielsweise eine PI Regler als Regler aufweisen. Dadurch können Ungenauigkeiten, sich ändernde Parameter im Gleichspannungsnetz oder auch Störungen zuverlässig ausgeregelt werden.

Darüber hinaus erzeugen die Spannungsquellen 61,62,63,64 jeweils einen Wechselspannungsanteil. Die Wechselspannungsanteile der ersten und dritten Spannungsquelle 61,63 sowie die zweiten und vierten Spannungsquelle 62,64 heben sich derart auf, dass diese in den Spannungen $U_a$ und $U_b$ der FIG 3 nicht enthalten sind. Zur Beschreibung der Wechselspannungsanteile der Spannungsquellen 61,62,63,64 dient FIG 4. Die Vereinfachung der FIG 3 für die Gleichspannungsanteile konnte gegenüber der FIG 4 daher erfolgen, da der erste Strompfad 71 und der zweite Strompfad 72 keinen Gleichstrom führen bzw. diesen hinreichend unterdrücken und für diesen somit einen Leerlauf darstellen. Für die Wechselspannungsanteile sind jedoch auch der erste Strompfad 71 und der zweite Strompfad 72 von Bedeutung, da die erste Spannungsquelle 61, die zweite Spannungsquelle 62 und der erste Strompfad 71 eine erste Masche 81 bilden. Die Gleichspannungsquelle 66 hat keinen Einfluss auf das Wechselspannungsverhalten. Durch die erste Spannungsquelle 61 und die zweite Spannungsquelle 62 wird ein Wechselstrom in dieser ersten Masche 81 erzeugt, der einen Austausch von Energie zwischen der ersten Spannungsquelle 61 und der zweiten Spannungsquelle 62 bewirkt. Dieser Energieaustausch entspricht vom Betrage her dem durch den Gleichanteil hervorgerufenen Energieaustausch und gleicht diesen im zeitlichen Mittel aus. Das gleiche gilt für eine zweite Masche 82, die durch den ersten Strompfad 71, den zweiten Strompfad 72, der dritten Spannungsquelle 63 und der vierten Spannungsquelle 64 gebildet wird. Diese zweite Masche 82 ermöglicht den Energieaustausch zwischen dritter Spannungsquelle 63 und vierter Spannungsquelle 64, so dass auch hier die Energie des Gleichspannungsanteils im zeitlichen Mittel ausgeglichen wird.

Wenn die zweite Induktivität 22 gegenüber der ersten Induktivität 21 klein ist, wird aufgrund des gleichen Wechselstroms in den beiden Maschen 81,82 die gleiche Energie zwischen den jeweiligen Spannungsquellen der jeweiligen Masche ausgetauscht. Dann erfolgt auch die Aufteilung der Gleichspannung $U_a$ und $U_b$ auf die Gleichspannungsanteile der jeweiligen Spannungsquellen zu gleichen Teilen. Wenn sich, beispielsweise aufgrund der zweiten Induktivität 22, in der zweiten Masche 82 ein kleinerer Wechselstrom ausbildet und sich daher ein kleinerer Energieaustausch zwischen der dritten und der vierten Spannungsquelle 63,64 stattfindet, wird die Aufteilung der Gleichspannungsanteile entsprechend an die Energieverhältnisse der Wechselspannungsanteile angepasst. Dann ist beispielsweise der Gleichspannungsanteil der ersten und zweiten Spannungsquelle 61,62 betraglich größer als der jeweilige Gleichspannungsanteil der dritten und vierten Spannungsquelle 63,64. Dadurch kann für jeden Betriebszustand sichergestellt werden, dass sich die Energien der Spannungsquellen 61,62,63,64 derart ausgleichen, dass alle Spannungsquellen energieneutral betrieben werden können. Dies ermöglicht den Einsatz von Spannungsquellen, die keine oder kleine Energiespeicher mit geringer Kapazität aufweisen. Ebenso benötigen diese Spannungsquellen keine weiteren Anschlüsse, um Energie mit dem Gleichspannungsnetz über weitere Anschlüsse auszutauschen. Dadurch können beispielsweise zweipolige Submodule 3 genutzt werden, die aus der Anwendung eines modularen Multilevel-Stromrichters bekannt und erprobt sind.

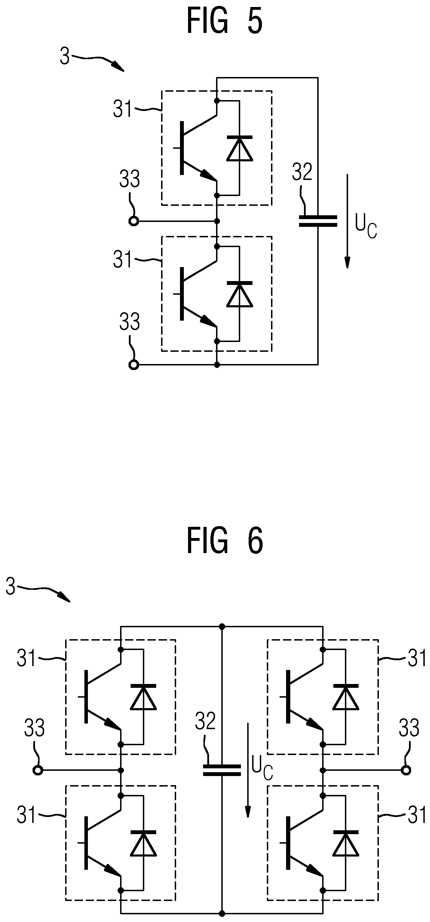

Die folgenden Figuren zeigen Ausführungsbeispiele für ein derartiges Submodul 3. Eine Ausgestaltung eines derartigen zweipoligen Submoduls 3 zeigt FIG 5. Das Submodul 3 weist zwei Halbleiterschalter 31 auf, die in Reihe angeordnet sind. Parallel zu der in Reihe angeordneten Halbleiterschalter 31 ist ein Kondensator 32 angeordnet, an dem eine Kondensatorspannung $U_C$ anliegt. Mit Hilfe von Schalthandlungen der Halbleiterschalter 31 kann die Kondensatorspannung oder ein Kurzschluss, d.h. U=0V, an Anschlüssen 33 des Submoduls 3 erzeugt werden. Das Submodul 3 weist genau zwei Anschlüsse auf. Somit kann der Kondensator nur über diese Anschlüsse ge- oder entladen werden. Dabei ist ein erster Anschluss 33 der zwei Anschlüsse 33 des Submoduls 3 elektrisch mit der Verbindung zwischen den zwei Halbleiterschaltern 31 verbunden. Ein zweiter Anschluss 33 der zwei Anschlüsse 33 ist dabei mit einem der Anschlüsse des Kondensators 32 elektrisch verbunden. Ein derartiges Submodul 3 wird auch als Halbbrückenmodul bezeichnet.

Die FIG 6 zeigt ein weiteres Ausführungsbeispiel eines Submoduls 3. Dieses zweipolige Submodul 3 weist vier Halbleiterschalter 31 auf. Parallel zu dem Kondensator 32 sind im Vergleich zum Halbbrückenmodul zwei weitere Halbleiterschalter 31 in Reihe angeordnet. Dabei ist ein erster Anschluss 33 der zwei Anschlüsse 33 des Submoduls 3 elektrisch mit der Verbindung zwischen den zwei ersten Halbleiterschaltern 31 verbunden und ein zweiter Anschluss 33 der zwei Anschlüsse 33 des Submoduls 3 elektrisch mit der Verbindung zwischen den zwei weiteren Halbleiterschaltern 31 verbunden. Mit Hilfe von Schalthandlungen der Halbleiterschalter 31 kann die positive Kondensatorspannung, die negative Kondensatorspannung oder ein Kurzschluss an den Anschlüssen 33 des Submoduls 3 erzeugt werden. Ein derartiges Submodul 3 wird auch als Vollbrückenmodul bezeichnet.

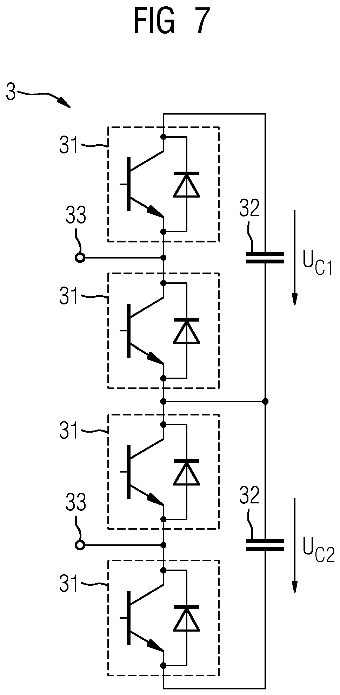

Die FIG 7 zeigt ein Doppelhalbbrückenmodul, bei dem zwei Halbbrückenmodule an ihrem zweiten Anschluss miteinander verbunden sind. Das zweipolige Submodul weist vier Halbleiterschalter 31 und zwei Kondensatoren 32 mit einer ersten Kondensatorspannung $U_{C1}$ und einer zweiten Kondensatorspannung $U_{C2}$ auf. Mit Hilfe von Schalthandlungen der Halbleiterschalter 31 kann die erste Kondensatorspannung $U_{C1}$, die zweite Kondensatorspannung $U_{C2}$, die Summe der Kondensatorspannungen $U_{C1}+U_{C2}$ oder ein Kurzschluss an den Anschlüssen 33 des Submoduls 3 erzeugt werden.

Zur Realisierung einer Spannungsquelle können alle diese Submodule 3 genutzt werden. Darüber hinaus können auch weitere Submodule 3 genutzt werden, insbesondere dann, wenn diese auch für die Verwendung in einem modularen Multilevel-Stromrichter geeignet sind. Dabei können in einer Reihenschaltung auch unterschiedliche Submodule 3 miteinander kombiniert werden.

Bezugszeichenliste

| | |
|---|---|
| 1 | Lastflussregler |
| 3 | Submodul |
| 4 | Netzanschluss |
| 5 | Netzwerkknoten |
| 8 | Leitung |
| 9 | weiteres Submodul |
| 10 | Gleichspannungsnetz |
| 11 | erstes Gleichspannungsteilnetz |
| 12 | zweites Gleichspannungsteilnetz |
| 21 | erste Induktivität |
| 22 | zweite Induktivität |
| 31 | Halbleiterschalter |
| 32 | Kondensator |
| 33 | Anschlüsse des Submoduls (3) |
| 41 | erster Übertragungsanschluss |
| 42 | zweiter Übertragungsanschluss |

51 erster interner Knoten
52 zweiter interner Knoten
61 erste Spannungsquelle
62 zweite Spannungsquelle
63 dritte Spannungsquelle
64 vierte Spannungsquelle
66 Gleichspannungsquelle
71 erster Strompfad
72 zweiter Strompfad
81 erste Masche
82 zweite Masche

**Patentansprüche**

1. Lastflussregler (1) für ein Gleichspannungsnetz (10), aufweisend:

    - einen Netzanschluss (4),
    - einen ersten Übertragungsanschluss (41) und einen zweiten Übertragungsanschluss (42),
    - einen ersten internen Knoten (51) und einen zweiten internen Knoten (52),
    - eine erste Spannungsquelle (61), die zwischen dem ersten Netzanschluss (4) und dem ersten internen Knoten (51) angeordnet ist,
    - eine zweite Spannungsquelle (62), die zwischen dem ersten Netzanschluss (4) und dem zweiten internen Knoten (52) angeordnet ist,
    - eine dritte Spannungsquelle (63), die zwischen dem ersten internen Knoten (51) und dem ersten Übertragungsanschluss (41) angeordnet ist,
    - eine vierte Spannungsquelle (64), die zwischen dem zweiten internen Knoten (52) und dem zweiten Übertragungsanschluss (42) angeordnet ist,
    - einen ersten Strompfad (71), der zwischen dem ersten internen Knoten (51) und dem zweiten internen Knoten (52) angeordnet und derart ausgebildet ist, einen Gleichstrom durch den ersten Strompfad (71) zu unterdrücken,

    **gekennzeichnet durch**

    - einen zweiten Strompfad (72), der zwischen dem ersten Übertragungsanschluss (41) und dem zweiten Übertragungsanschluss (42) angeordnet und derart ausgebildet ist, einen Gleichstrom durch den zweiten Strompfad (72) zu unterdrücken,
    wobei die erste, zweite, dritte und vierte Spannungsquelle (61,62,63,64) jeweils eingerichtet sind, eine Spannung mit einem Gleichanteil und einem Wechselspannungsanteil zu erzeugen.

2. Lastflussregler (1) nach Anspruch 1, wobei der erste Strompfad (71) und/oder der zweite Strompfad (72) durch eine Gleichspannungsquelle (66) gebildet wird/werden.

3. Lastflussregler (1) nach einem der Ansprüche 1 oder 2, wobei mindestens eine der Spannungsquellen (61,62,63,64) durch ein Submodul (3) oder eine Reihenschaltung von Submodulen (3) gebildet wird, wobei das Submodul (3) mindestens zwei Halbleiterschalter (31) und mindestens einen Kondensator (32) aufweist, die derart angeordnet sind, dass mittels der Halbleiter (31) zumindest die Schaltzustände Kurzschluss und Kondensatorspannung an Anschlüssen (33) des Submoduls (3) erzeugbar sind.

4. Lastflussregler (1) nach Anspruch 3, wobei das Submodul (3) mindestens vier Halbleiterschalter (31) aufweist, die derart angeordnet sind, dass mittels der Halbleiter (31) zumindest die Schaltzustände Kurzschluss, positive Kondensatorspannung und negative Kondensatorspannung an den Anschlüssen (33) des Submoduls (3) erzeugbar sind.

5. Lastflussregler (1) nach einem der Ansprüche 3 oder 4, wobei das Submodul (3) bzw. die Submodule (3) genau zwei Anschlüsse (33) zum Austausch elektrischer Energie aufweist bzw. aufweisen.

6. Lastflussregler (1) nach einem der Ansprüche 1 bis 5, wobei mindestens eine der Gleichspannungsquellen (66) durch ein weiteres Submodul (9) oder eine Reihenschaltung von weiteren Submodulen (9) gebildet wird, wobei das weitere Submodul (9) mindestens zwei Halbleiterschalter (31) und mindestens einen Kondensator (32) aufweist, die derart angeordnet sind, dass mittels der Halbleiter (31) zumindest die Schaltzustände Kurzschluss und Kondensatorspannung an Anschlüssen (33) des weiteren Submoduls (9) erzeugbar sind.

7. Gleichspannungsnetz (10), aufweisend

   - einen Lastflussregler (1) nach einem der Ansprüche 1 bis 6,
   - ein erstes Gleichspannungteilnetz (11) und
   - zwei Leitungen (8),
   wobei das erste Gleichspannungteilnetz (11) mit dem Netzanschluss (4) elektrisch verbunden ist, wobei eine erste Leitung der zwei Leitungen (8) mit dem ersten Übertragungsanschluss (41) und eine zweite Leitung der zwei Leitungen (8) mit dem zweiten Übertragungsanschluss (42) elektrisch verbunden ist.

8. Gleichspannungsnetz (10) nach Anspruch 7, wobei das Gleichspannungsnetz (10) ferner ein zweites Gleichspannungsteilnetz (12) aufweist, wobei das zweite Gleichspannungsteilnetz (12) über die zwei Leitungen (8) und den Lastflussregler (1) mit dem ersten Gleichspannungsteilnetz (11) verbunden ist, wobei sich die Leitungslängen der zwei Leitungen (8) zwischen dem Lastflussregler (1) und dem zweiten Gleichspannungsteilnetz (12) um mindestens 10%, insbesondere um mehr als 40%, unterscheiden.

9. Verfahren zum Betreiben eines Lastflussreglers (1) nach einem der Ansprüche 1 bis 6 oder eines Gleichspannungsnetzes (10) nach einem der Ansprüche 7 oder 8, wobei abhängig von einem ersten Gleichstrom ($i_{DC,1}$) zwischen dem Netzanschluss (4) und dem ersten Übertragungsanschluss (41) und/oder einem zweiten Gleichstrom ($i_{DC,2}$) zwischen dem Netzanschluss (4) und dem zweiten Übertragungsanschluss (42) jeweils ein Gleichspannungsanteil von der ersten, zweiten, dritten und vierten Spannungsquelle (61,62,63,64) erzeugt wird, wobei die erste, zweite, dritte und vierte Spannungsquelle (61,62,63,64) ferner jeweils einen Wechselspannungsanteil erzeugen, wobei die Wechselspannungsanteile der ersten und der dritten Spannungsquelle (61,63) derart ausgebildet sind, dass sich diese Wechselspannungsanteile in einer Spannung zwischen dem ersten Netzanschluss (4) und dem ersten Übertragungsanschluss (41) gegenseitig kompensieren und die Wechselspannungsanteile der zweiten und der vierten Spannungsquelle (62,64) derart ausgebildet sind, dass sich diese Wechselspannungsanteile in einer Spannung zwischen dem ersten Netzanschluss (4) und dem zweiten Übertragungsanschluss (42) gegenseitig kompensieren, wobei der Wechselspannungsanteil derart erzeugt wird, einen durch den Gleichspannungsanteil und dem ersten Gleichstrom bzw. zweiten Gleichstrom hervorgerufenen Energieaustausch bei zumindest einem Teil der Spannungsquellen (61,62,63,64) entgegenzuwirken.

10. Verfahren nach Anspruch 9, wobei die zweite Gleichspannungsquelle (62) den Gleichspannungsanteil mit einem zum Gleichspannungsanteil der ersten Gleichspannungsquelle (61) entgegengesetztem Vorzeichen erzeugt, wobei die vierte Gleichspannungsquelle (64) den Gleichspannungsanteil mit einem zum Gleichspannungsanteil der dritten Gleichspannungsquelle (63) entgegengesetztem Vorzeichen erzeugt.

11. Verfahren nach einem der Ansprüche 9 oder 10, wobei der Gleichspannungsanteil und der Wechselspannungsanteil jeder der Spannungsquellen (61,62,63,64) derart bemessen sind, dass die aufgrund von Gleichanteilen und Wechselanteilen ausgetauschte Energie der jeweiligen Spannungsquelle (61,62,63,64) im zeitlichen Mittel gleich null ist.

**Claims**

1. Load flow controller (1) for a DC voltage network (10), comprising:

   - a grid connection (4),
   - a first transmission connection (41) and a second transmission connection (42),
   - a first internal node (51) and a second internal node (52),
   - a first voltage source (61), which is arranged between the first grid connection (4) and the first internal node (51),
   - a second voltage source (62), which is arranged between the first grid connection (4) and the second internal node (52),
   - a third voltage source (63), which is arranged between the first internal node (51) and the first transmission connection (41),
   - a fourth voltage source (64), which is arranged between the second internal node (52) and the second transmission connection (42),

- a first current path (71), which is arranged between the first internal node (51) and the second internal node (52) and is configured to suppress a direct current through the first current path (71), **characterized by**

- a second current path (72), which is arranged between the first transmission connection (41) and the second transmission connection (42), and which is configured to suppress a direct current through the second current path (72), wherein the first, second, third, and fourth voltage sources (61, 62, 63, 64) are each configured to generate a voltage having a DC voltage component and an AC voltage component.

2. Load flow controller (1) according to claim 1, wherein the first current path (71) and/or the second current path (72) are formed by a DC voltage source (66).

3. Load flow controller (1) according to one of claims 1 or 2, wherein at least one of the voltage sources (61, 62, 63, 64) is formed by a submodule (3) or a series connection of submodules (3), wherein the submodule (3) comprises at least two semiconductor switches (31) and at least one capacitor (32), which are arranged such that, by means of the semiconductor switches (31), at least the switching states short circuit and capacitor voltage may be generated at terminals (33) of the submodule (3).

4. Load flow controller (1) according to claim 3, wherein the submodule (3) comprises at least four semiconductor switches (31), which are arranged such that at least the switching states of short circuit, positive capacitor voltage, and negative capacitor voltage may be generated at the terminals (33) of the submodule (3) by means of the semiconductor switches (31).

5. Load flow controller (1) according to one of claims 3 or 4, wherein the submodule (3) or the submodules (3) comprises or comprise exactly two terminals (33) for exchanging electrical energy.

6. Load flow controller (1) according to one of claims 1 to 5, wherein at least one of the DC voltage sources (66) is formed by a further submodule (9) or a series connection of further submodules (9), wherein the further submodule (9) comprises at least two semiconductor switches (31) and at least one capacitor (32), which are arranged such that at least the switching states of short circuit and capacitor voltage may be generated at terminals (33) of the further submodule (9) by means of the semiconductor switches (31).

7. DC voltage network (10), comprising

   - a load flow controller (1) according to one of claims 1 to 6,
   - a first DC voltage subnetwork (11), and
   - two lines (8),

   wherein the first DC voltage subnetwork (11) is electrically connected to the grid connection (4), wherein a first line of the two lines (8) is electrically connected to the first transmission connection (41), and a second line of the two lines (8) is electrically connected to the second transmission connection (42).

8. DC voltage network (10) according to claim 7, wherein the DC voltage network (10) further comprises a second DC voltage subnetwork (12), wherein the second DC voltage subnetwork (12) is connected to the first DC voltage subnetwork (11) via the two lines (8) and the load flow controller (1), wherein the line lengths of the two lines (8) between the load flow controller (1) and the second DC voltage subnetwork (12) differ by at least 10%, in particular by more than 40%.

9. Method for operating a load flow controller (1) according to one of claims 1 to 6 or a DC voltage network (10) according to claim 7 or 8, wherein, depending on a first direct current ($i_{DC,1}$) between the grid connection (4) and the first transmission connection (41) and/or a second direct current ($i_{DC,2}$) between the grid connection (4) and the second transmission connection (42), a respective DC voltage component is generated by the first, second, third, and fourth voltage sources (61, 62, 63, 64), wherein the first, second, third, and fourth voltage sources (61, 62, 63, 64) each further generate an AC voltage component, wherein the AC voltage components of the first and third voltage sources (61, 63) are configured such that these AC voltage components mutually compensate one another in a voltage between the grid connection (4) and the first transmission connection (41), and the AC voltage components of the second and fourth voltage sources (62, 64) are configured such that these AC voltage components mutually compensate one another in a voltage between the grid connection (4) and the second transmission connection (42), wherein the AC voltage component is generated such as to counteract an energy exchange caused by the DC voltage component and the first direct current or second direct current in at least a part of the voltage sources (61, 62, 63, 64).

**10.** Method according to claim 9, wherein the second DC voltage source (62) generates the DC voltage component with a sign opposite to the DC voltage component of the first DC voltage source (61), wherein the fourth DC voltage source (64) generates the DC voltage component with a sign opposite to the DC voltage component of the third DC voltage source (63).

**11.** Method according to one of claims 9 or 10, wherein the DC voltage component and the AC voltage component of each of the voltage sources (61, 62, 63, 64) are dimensioned such that the energy exchanged as a result of the DC components and AC components of the respective voltage source (61, 62, 63, 64) is equal to zero on average over time.

**Revendications**

**1.** Régulateur de flux de charge (1) pour un réseau à tension continue (10), comprenant :

- une connexion au réseau (4),
- une première borne de transmission (41) et une deuxième borne de transmission (42),
- un premier nœud interne (51) et un deuxième nœud interne (52),
- une première source de tension (61) placée entre la connexion au réseau (4) et le premier nœud interne (51),
- une deuxième source de tension (62) placée entre la connexion au réseau (4) et le deuxième nœud interne (52),
- une troisième source de tension (63) placée entre le premier nœud interne (51) et la première borne de transmission (41),
- une quatrième source de tension (64) placée entre le deuxième nœud interne (52) et la deuxième borne de transmission (42),
- un premier chemin de courant (71) disposé entre le premier nœud interne (51) et le deuxième nœud interne (52) et conçu pour supprimer un courant continu traversant le premier chemin de courant (71), **caractérisé par**
- un deuxième chemin de courant (72) disposé entre la première borne de transmission (41) et la deuxième borne de transmission (42) et conçu pour supprimer un courant continu traversant le deuxième chemin de courant (72), les première, deuxième, troisième et quatrième sources de tension (61, 62, 63, 64) étant chacune configurées pour produire une tension comportant une composante continue et une composante alternative.

**2.** Régulateur de flux de charge (1) selon la revendication 1, dans lequel le premier chemin de courant (71) et/ou le deuxième chemin de courant (72) est/sont formé(s) par une source de tension continue (66).

**3.** Régulateur de flux de charge (1) selon l'une des revendications 1 ou 2, dans lequel au moins l'une des sources de tension (61, 62, 63, 64) est constituée par un sous-module (3) ou par un montage en série de sous-modules (3), le sous-module (3) comportant au moins deux interrupteurs à semi-conducteurs (31) et au moins un condensateur (32), lesquels sont agencés de manière à ce qu'au moins les états de commutation de court-circuit et de tension de condensateur puissent être générés aux bornes (33) du sous-module (3) au moyen des semi-conducteurs (31).

**4.** Régulateur de flux de charge (1) selon la revendication 3, dans lequel le sous-module (3) comporte au moins quatre interrupteurs à semi-conducteurs (31) disposés de telle sorte qu'il est possible, au moyen des semi-conducteurs (31), de générer au moins les états de commutation « court-circuit », « tension de condensateur positive » et « tension de condensateur négative » aux bornes (33) du sous-module (3).

**5.** Régulateur de flux de charge (1) selon l'une des revendications 3 ou 4, dans lequel le sous-module (3) ou les sous-modules (3) comporte(nt) exactement deux bornes (33) pour l'échange d'énergie électrique.

**6.** Régulateur de flux de charge (1) selon l'une des revendications 1 à 5, dans lequel au moins l'une des sources de tension continue (66) est constituée par un sous-module supplémentaire (9) ou par un montage en série de sous-modules supplémentaires (9), le sous-module supplémentaire (9) comportant au moins deux interrupteurs à semi-conducteurs (31) et au moins un condensateur (32), lesquels sont disposés de telle sorte qu'il est possible, au moyen des semi-conducteurs (31), de générer au moins les états de commutation de court-circuit et de tension de condensateur au niveau des bornes (33) du sous-module supplémentaire (9).

**7.** Réseau à tension continue (10) comprenant

- un régulateur de flux de charge (1) selon l'une des revendications 1 à 6,
- un premier sous-réseau à tension continue (11) et
- deux lignes (8),

dans lequel le premier sous-réseau à tension continue (11) est relié électriquement au raccordement au réseau (4), et dans lequel une première des deux lignes (8) est reliée électriquement au premier raccordement de transport (41) et une deuxième des deux lignes (8) est reliée électriquement au deuxième raccordement de transport (42).

8. Réseau à tension continue (10) selon la revendication 7, dans lequel le réseau à tension continue (10) comporte en outre un deuxième sous-réseau à tension continue (12), le deuxième sous-réseau à tension continue (12) étant relié au premier sous-réseau à tension continue (11) par l'intermédiaire des deux lignes (8) et du régulateur de flux de charge (1), les longueurs des deux lignes (8) entre le régulateur de flux de charge (1) et le deuxième sous-réseau à tension continue (12) différant d'au moins 10 %, en particulier de plus de 40 %.

9. Procédé d'exploitation d'un régulateur de flux de charge (1) selon l'une des revendications 1 à 6 ou d'un réseau à courant continu (10) selon l'une des revendications 7 ou 8, dans lequel, en fonction d'un premier courant continu ($i_{DC,1}$) circulant entre le point de raccordement au réseau (4) et la première borne de transmission (41) et/ou d'un deuxième courant continu ($i_{DC,2}$) circulant entre le point de raccordement au réseau (4) et la deuxième borne de transmission (42), une composante de tension continue est produite par chacune des première, deuxième, troisième et quatrième sources de tension (61, 62, 63, 64), dans lequel les première, deuxième, troisième et quatrième sources de tension (61, 62, 63, 64) produisent en outre chacune une composante de tension alternative, dans lequel les composantes de tension alternative des première et troisième sources de tension (61, 63) sont conçues de manière à ce que ces composantes de tension alternative se compensent mutuellement au niveau d'une tension entre le premier point de raccordement au réseau (4) et la première borne de transmission (41), et dans lequel les composantes de tension alternative des deuxième et quatrième sources de tension (62, 64) sont conçues de manière à ce que ces composantes de tension alternative se compensent mutuellement au niveau d'une tension entre le premier point de raccordement au réseau (4) et la deuxième borne de transmission (42), et dans lequel la composante de tension alternative est produite de manière à contrer un échange d'énergie provoqué par la composante de tension continue et le premier courant continu ou le deuxième courant continu au niveau d'au moins une partie des sources de tension (61, 62, 63, 64).

10. Procédé selon la revendication 9, dans lequel la deuxième source de tension continue (62) génère la composante de tension continue avec un signe opposé à celui de la composante de tension continue de la première source de tension continue (61), et dans lequel la quatrième source de tension continue (64) génère la composante de tension continue avec un signe opposé à celui de la composante de tension continue de la troisième source de tension continue (63).

11. Procédé selon l'une des revendications 9 ou 10, dans lequel la composante continue et la composante alternative de chacune des sources de tension (61, 62, 63, 64) sont dimensionnées de telle sorte que l'énergie échangée par la source de tension (61, 62, 63, 64) concernée, en raison des composantes continue et alternative, soit égale à zéro en moyenne dans le temps.

FIG 1

10

11

12

1

4

41 $i_{DC,1}$

42 $i_{DC,2}$

5

8 $R_{L1}$ $L_{L1}$

$L_{L2b}$ 8 $R_{L2b}$

$L_{L2a}$ $R_{L2a}$

61 $u_1$ 51 71 52 $u_2$ 62

63 $u_3$ 72 64 $u_4$

FIG 2

# FIG 3

# FIG 4

## FIG 5

## FIG 6

# FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3218980 B1

**In der Beschreibung aufgeführte Nicht-Patentliteratur**

- **HOFMANN VIKTOR et al.** *A modular and scalable HVDC current flow controller*